(19) Europäisches Patentamt
European Patent Office
Office européen des brevets

(11) **EP 2 167 708 B1**

(12) **FASCICULE DE BREVET EUROPEEN**

(45) Date de publication et mention
de la délivrance du brevet:
**08.12.2010 Bulletin 2010/49**

(51) Int Cl.:
*C25C 1/06* (2006.01)   *C02F 1/469* (2006.01)

(21) Numéro de dépôt: **08806081.9**

(86) Numéro de dépôt international:
**PCT/FR2008/051149**

(22) Date de dépôt: **25.06.2008**

(87) Numéro de publication internationale:
**WO 2009/007598 (15.01.2009 Gazette 2009/03)**

(54) **PROCÉDÉ ET UN DISPOSITIF D'EXTRACTION SÉLECTIVE DE CATIONS PAR TRANSFERT ÉLECTROCHIMIQUE EN SOLUTION, ET APPLICATIONS DE CE PROCÉDÉ.**

VERFAHREN UND VORRICHTUNG ZUR SELEKTIVEN EXTRAKTION VON KATIONEN DURCH ELEKTROCHEMISCHEN TRANSFER IN EINER LÖSUNG UND ANWENDUNGEN FÜR DIESES VERFAHREN

METHOD AND DEVICE FOR SELECTIVE CATION EXTRACTION BY ELECTROCHEMICAL TRANSFER IN SOLUTION AND APPLICATIONS OF SAID METHOD

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité:  **27.06.2007   FR 0704599**

(43) Date de publication de la demande:
**31.03.2010   Bulletin 2010/13**

(73) Titulaires:
• **Universite Paul Verlaine**
  **57000 Metz (FR)**
• **Centre National de la Recherche Scientifique**
  **75794 Paris Cedex 16 (FR)**

(72) Inventeurs:
• **BOULANGER, Clotilde**
  **F-57420 Coin Les Cuvry (FR)**
• **SEGHIR, Sakina**
  **F-57000 Metz (FR)**
• **LECLERC, Nathalie**
  **F-57220 Bionville Sur Nied (FR)**
• **DILIBERTO, Sébastien**
  **F-54000 Nancy (FR)**

• **LECUIRE, Jean-Marie**
  **F-57420 Coin Les Cuvry (FR)**

(74) Mandataire: **Brungard, Yves Francois**
**Novagraaf Technologies**
**11, rue Graham Bell**
**57070 Metz (FR)**

(56) Documents cités:
**DE-A1- 10 311 573**

• XU ET AL: "Ion exchange membranes: State of their development and perspective" JOURNAL OF MEMBRANE SCIENCE, ELSEVIER SCIENTIFIC PUBL.COMPANY. AMSTERDAM, NL, vol. 263, no. 1-2, 15 octobre 2005 (2005-10-15), pages 1-29, XP005081239 ISSN: 0376-7388
• GARCIA-GABALDON ET AL: "Effect of porosity on the effective electrical conductivity of different ceramic membranes used as separators in eletrochemical reactors" JOURNAL OF MEMBRANE SCIENCE, ELSEVIER SCIENTIFIC PUBL.COMPANY. AMSTERDAM, NL, vol. 280, no. 1-2, 1 septembre 2006 (2006-09-01), pages 536-544, XP005544306 ISSN: 0376-7388

**Description**

La présente invention concerne un procédé et un dispositif d'extraction sélective de cations par transfert électrochimique en solution, et diverses applications de ce procédé par exemple pour des traitements de séparation, recyclage, dépollution, valorisation directe ou indirecte des produits obtenus par le transfert, déminéralisation, concentration, etc.

L'invention concerne plus précisément un procédé de type électrolytique assurant un transport d'ions, plus particulièrement de cations, au travers d'une paroi adaptée, depuis une première solution d'électrolyte contenant une ou plusieurs catégories d'ions de même charge ou de charge différente, vers une deuxième solution électrolytique.

On connaît déjà les procédés de ce type utilisant comme paroi de séparation des membranes ou résines échangeuses d'ions (Xu, T. :"Ion exchange membranes : state of their development and perspective", Journal of Membrane Science 263, 2005, p. 1-29).

Les procédés de séparation et de concentration utilisant des membranes synthétiques sont nombreux et d'applications très diverses.

Le rôle d'une membrane échangeuse d'ions est d'agir comme une barrière si possible sélective entre deux solutions. Sous l'effet d'une force de transfert généralement générée par un gradient de potentiel électrique, une telle membrane permet le passage ou l'arrêt de certaines espèces chimiques entre les deux milieux qu'elle sépare. La membrane peut être homogène ou hétérogène, de structure symétrique ou asymétrique. Elle peut être gazeuse, liquide, solide d'origine minérale ou organique. Elle peut être neutre ou porter des charges positives ou négatives. Elle peut être poreuse ou dense.

La méthode de base lors de l'utilisation des membranes échangeuses d'ion est l'électrodialyse qui correspond à un transfert d'ions à travers ces membranes sous l'effet d'un champ électrique. Les membranes échangeuses d'ions permettent le passage par migration des espèces chargées, et de manière sélective selon le signe de leur charge : transfert de cation dans le cas des membranes échangeuses de cations, transfert d'anions dans le cas de membranes échangeuses d'anions. Le transfert sélectif des espèces chargées s'effectue suivant un mécanisme d'échange d'ions de site en site entre les ions de la solution et les contre-ions portés par la membrane. Les mécanismes de sélectivité sont liés à la nature chimique des matériaux constituant les membranes.

L'électrodialyse est un procédé purement séparatif, les espèces chargées vont migrer sous l'effet du champ électrique et vont être retenues dans certains compartiments du dispositif utilisé grâce à des membranes sélectives. L'électrodialyse peut aussi être couplée à un processus d'électrolyse, les réactions aux électrodes, situées respectivement dans les compartiments de la cuve de part et d'autre de la membrane, étant alors également mises à profit et les espèces chimiques qui ont réagi migrent à travers la membrane sous l'effet du champ électrique.

Des procédés utilisant des membranes échangeuses d'ions sont utilisés par exemple pour la désalinisation d'eau de mer, le recyclage d'eau de rinçage utilisées lors de traitements de surfaces de produits métallurgiques, la régénération de bains de décapage, l'obtention d'eau ultra pure, ou encore le confinement de métaux lourds, etc.

Un inconvénient des membranes échangeuses d'ions est qu'elles ne permettent pas la séparation d'ions de même charge électrique. Il est donc impossible d'extraire sélectivement un cation métallique $A^{x+}$ par rapport à un autre $B^{x+}$ ayant la même charge. De plus si la sélectivité de transfert s'applique à une catégorie soit de cation ou soit d'anions, elle ne s'applique pas aux ions antagonistes. Il faut également noter que lorsque les membranes échangeuses d'ions ne sont pas soumises à un champ électrique, elles perdent toute sélectivité, et donc perdent leur caractéristique d'étanchéité à l'égard des ions qui sont retenus en présence du champ électrique. De plus les procédés membranaires classiques ne peuvent être exploités dans le cas de deux milieux différents par leur nature, par exemple aqueux/non-aqueux. Parmi les autres inconvénients de ces membranes on notera encore leur coût et leur tenue dans le temps limitée.

Par ailleurs, on connaît aussi des matériaux appelés phases à clusters de molybdène, ou encore phases de Chevrel, de formule générale $Mo_6X_8$, avec X pouvant être notamment S, Se, Te. Les chalcogénures ternaires de molybdène présentent une diversité de propriétés physiques et électrochimiques, telles que :

- propriétés supraconductrices à basse température des phases à gros cations ;
- propriétés magnétiques supraconductrices ;
- conductivité mixte ionique et électronique des phases à petits cations, ce qui permet à ces matériaux d'être le siège de réactions topotactiques d'intercalation/désintercalation réversibles.

Ces matériaux ont déjà été étudiés pour la synthèse en chimie douce de nouveaux matériaux, valorisables pour leurs propriétés électroniques, catalytiques voire thermoélectriques d'une part ou pour leur capacité de stockage et restitution de l'énergie électrique d'autre part. Une application qui en découla fut la réalisation de batteries rechargeables au Lithium. Par leur activité catalytique en hydrodésulfuration, les phases de Chevrel ont également suscité un intérêt en catalyse hétérogène.

US-4917871 et US-5041347 décrivent la préparation et l'utilisation de phases de Chevrel comme cathode dans des piles au lithium. FR-2765811 concerne un catalyseur d'hydrotraitement obtenu par formation de phases de Chevrel dispersées sur un oxyde métallique réfractaire. WO-0109959 décrit un module de pile solaire à base de fibre de verre et de phases de Chevrel. WO-02/05366 décrit l'utilisation de matériau à base de phases de Chevrel comportant des éléments métalliques de remplissage, comme matériau thermoélectrique pour la production d'énergie. US-2005/0220699 décrit un procédé amélioré de production de matériau à phases de Chevrel, pour la fabrication de matériaux supraconducteurs ou de catalyseurs. JP-2005/317289 décrit une utilisation des phases de Chevrel comme catalyseur exempt de platine, ou à faible taux de Pt, dans les piles à combustible.

La présente invention a pour but de résoudre les problèmes posés par l'utilisation des membranes échangeuses d'ion, relatés ci-avant. Elle vise notamment à permettre un transfert sélectif amélioré d'ions métalliques d'un milieu aqueux ou non aqueux, par exemple un rejet industriel liquide (bains de galvanoplastie usagés, eaux de rinçage, bains de décapage, lixiviats de poussières d'aciérie, lixiviats de piles usagées, scories notamment d'usines d'incinération, de sable de fonderie et autres rejets solides des industries métallurgiques) vers un autre milieu électrolytique apte à la valorisation directe ou indirecte du métal transféré. Elle vise de manière plus générale à permettre l'extraction et le transfert sélectif de cations entre phases électrolytiques aqueuses et/ou non-aqueuses.

Avec ces objectifs en vue, l'invention a pour objet un procédé d'extraction sélective de cations par transfert électrochimique en solution d'un premier électrolyte à un second électrolyte, caractérisé en ce qu'on utilise comme paroi de séparation des électrolytes une paroi de transfert formée de chalcogénures à cluster de molybdène, notamment les phases $Mo_6X_8$ appelées phases de Chevrel, et on assure un transfert de cations à travers la dite paroi de transfert en générant une différence de potentiel entre d'une part le premier électrolyte, et d'autre part le deuxième électrolyte ou la dite paroi de transfert, de manière à provoquer une intercalation des cations dans la paroi de transfert du côté du premier électrolyte, une diffusion des cations dans celle-ci, puis leur désintercalation dans le deuxième électrolyte.

Sous le terme chalcogénures à cluster de molybdène, il doit être entendu des matériaux binaires ou ternaires structurés à partir de cluster de molybdène $Mo_n$ et de réseaux de chalcogénures désignés X avec X étant S (Soufre), Se (Sélénium) ou Te (Tellure), selon la stoechiométrie générale $Mo_nX_{n+2}$ ou $Mo_nX_n$ pour la formulation des binaires, et la formulation $M_xMo_nX_{n+2}$ ou $M_xMo_nX_n$ pour les chalcogénures ternaires, avec M étant un métal.

L'invention est donc un procédé d'électrolyse assurant un transport ou transfert sélectif, à travers une jonction minérale constituée par la dite paroi de transfert, d'un cation ou d'un ensemble de cations, depuis un premier électrolyte contenant plusieurs cations, notamment de charges différentes, vers une solution électrolytique de récupération et/ou de valorisation.

Le principe du procédé se fonde sur les réactions d'intercalation de cations sous un potentiel ou une densité de courant appliqués à une matrice solide insoluble et chimiquement stable au contact de milieux aqueux ou organiques. Le développement du phénomène global d'intercalation des cations dans la matrice des phases de Chevrel, du côté du premier électrolyte, diffusion dans cette matrice, puis désintercalation du côté du deuxième électrolyte, permet le transfert d'un milieu à l'autre de l'espèce mobile prédéterminée, en l'occurrence le cation. Le procédé selon l'invention se distingue notamment des procédés de séparation membranaires par le fait qu'il est fondé sur le développement du processus des réactions d'intercalation et désintercalation se développant de manière simultanée et par voie électrochimique, provoqué par la mise en oeuvre du processus global d'électrolyse entre les deux électrolytes.

Si les phases de Chevrel ont déjà fait l'objet d'études approfondies en ce qui concerne certaines de leurs caractéristiques et pour certaines applications envisagées, comme indiquées ci-dessus dans la présentation de l'art antérieur, aucune étude ne s'est portée sur l'exploitation de ce type de réaction pour le transfert de cations sous contrôle électrochimique, d'un premier électrolyte, ou électrolyte source, à un deuxième électrolyte, ou électrolyte de récupération, de cations valorisables ou polluants.

Contrairement aux procédés de séparation utilisant des membranes échangeuses d'ion, le procédé selon l'invention permet une séparation sélective entre ions de même charge et de nature différente. Le procédé selon l'invention permet aussi un transfert sélectif d'ions d'un premier milieu aqueux ou non à un deuxième milieu aqueux ou non, ces deux milieux pouvant être de même nature ou différents, par exemple le premier milieu pouvant être aqueux et le deuxième milieu organique.

Un autre avantage de l'invention est que, mis à part les produits nécessaires à l'élaboration de la paroi de transfert, aucun réactif n'intervient dans le procédé et il n'y a pas de formation de rejets.

Les cations susceptibles d'être traités selon l'invention, c'est à dire capables d'être engagés dans les réactions d'intercalation-désintercalation sont, pour les phases de Chevrel sulfurées, séléniées ou tellurées ($Mo_6S_8$, $Mo_6Se_8$ ou $Mo_6Te_8$), la plupart des métaux « industriel » : Fe, Mn, Co, Ni, Cr, Cu, Zn, Cd, pouvant intervenir dans de nombreux problèmes de gestion d'effluents et de rejets solides, ainsi que les métaux alcalins et alcalino-terreux Li, Na, Mg.

L'invention repose en fait sur une nouvelle exploitation des propriétés particulières des phases de Chevrel relatives à leur capacité de transfert sélectif de cations, en fonction des caractéristiques d'oxydoréduction des ions en présence. La remarquable mobilité de petits cations, de rayon ionique typiquement inférieur à 0,1 nm, dans les matrices minérales, construites sur les unités $Mo_6X_8$ des phases de Chevrel, définit des systèmes redox réversibles du type

$$Mo_6X_8 + x\ M^{n+} + xn\ e^- \Leftrightarrow M_xMo_6X_8$$

Ces systèmes redox sont diversifiés par la nature du cation $M^{n+}$, du chalcogène X et de la stoechiométrie x du ternaire.

L'intercalation d'un cation M dans une matrice donnée d'une phase de Chevrel (sulfurée, séléniée ou tellurée par exemple) se développe dans un domaine de potentiel spécifique à la nature du cation, de la matrice et des paramètres chimiques de l'électrolyte à traiter. Il en est de même pour la désintercalation. Pour une sélectivité d'intercalation entre deux cations M et M', l'intensité appliquée doit imposer un potentiel de travail (par la relation E = f(i) du système redox) situé dans le domaine d'intercalation du cation M en évitant de passer dans le domaine où va se produire l'intercalation supplémentaire du cation M'. Pour une intensité plaçant le potentiel de travail dans le domaine d'intercalation du deuxième cation, il se produirait alors le transfert des deux cations avec perte plus ou moins totale de sélectivité. Par exemple, dans le cas d'un mélange Cd-Zn dans le premier électrolyte et avec une paroi de transfert en $Mo_6S_8$, le transfert sélectif du cadmium sera effectué si le potentiel de l'interface entre le premier électrolyte et la paroi de transfert est maintenu dans le domaine de potentiel -0,450 à -0,700 V par rapport à une électrode à calomel à KCl saturé (ECS) située dans le premier électrolyte. Pour des potentiels plus négatifs, le transfert affectera les deux cations. Pour une jonction en $Mo_6Se_8$ le domaine de sélectivité sera dans la gamme de -0,300 à -0,600 V/ECS. Selon un autre exemple, pour une jonction en $Mo_6S_8$ et dans le cas d'un mélange Ni-Co, le transfert sélectif du cobalt se fera si le potentiel est maintenu dans le domaine de potentiel de - 0,400 à -0,600 V / ECS.

Bien qu'essentiellement avantageuse par ses propriétés de sélectivité lors du transfert des cations, l'invention permet aussi un abattement global des métaux intercalables par transfert sans impératif de sélectivité, ce qui correspond à une extraction par transfert électrochimique, par exemple pour un traitement d'épuration d'un effluent, voire d'un bassin de rétention. L'invention permet aussi de réaliser une concentration de cations, de manière sélective ou non, par transfert d'une solution diluée constituant le premier électrolyte vers le deuxième électrolyte de volume réduit par rapport au premier électrolyte pour obtenir l'effet de concentration recherché.

Selon une mise en oeuvre particulière de l'invention, la paroi de transfert est raccordée électriquement à un appareil de mesure du potentiel entre la dite paroi et des électrodes de référence situées respectivement dans chaque électrolyte. Cette disposition permet en fait de contrôler que le processus de transfert s'effectue correctement et, on peut en adaptant le courant d'électrolyse ajuster en conséquence le potentiel appliqué entre les dits électrolytes.

Selon une autre disposition complémentaire, on peut assurer une récupération directe à l'état métallique du cation transféré par électrodéposition sur l'électrode disposée dans le deuxième électrolyte. L'utilisation d'un deuxième électrolyte non aqueux permet alors par exemple une valorisation adaptée du cation transféré, par électrodéposition de métaux non réalisable dans un milieu aqueux.

Selon une variante, la différence de potentiel est générée entre le premier électrolyte et la dite paroi de transfert, et la désintercalation du côté du deuxième électrolyte est une désintercalation chimique par un oxydant chimique dans le deuxième électrolyte.

Pour accroître la sélectivité du transfert, on peut aussi assurer une succession de transferts de cations à travers des parois de transfert selon l'invention, disposées successivement, en cascade, entre des électrolytes extrêmes, et avec un ou des électrolytes intermédiaires entre les différentes parois de transfert, lesquelles peuvent aussi être de nature différente, par exemple l'une en $Mo_6S_8$ et l'autre $Mo_6Se_s$ ou $Mo_6Te_8$.

On peut aussi assurer entre les électrolytes une électrolyse en courants pulsés, pouvant comporter des impulsions cathodiques et anodiques pour le fonctionnement de l'interface entre paroi de transfert et premier électrolyte, pour améliorer la sélectivité de la réaction d'intercalation pour un cation prédéterminé.

L'invention a aussi pour objet un dispositif d'extraction sélective de cations par transfert électrochimique en solution, ce dispositif comportant une cuve avec au moins deux compartiments agencés pour contenir chacun un électrolyte et séparés par une cloison étanche, et étant caractérisé en ce que la dite cloison étanche est constituée au moins en partie d'au moins une paroi de transfert formée de chalcogénure à cluster de molybdène, notamment d'un composé minéral de la famille des phases de Chevrel, de type $Mo_6X_8$ avec X étant S, Se, ou Te.

Selon une disposition préférentielle, la dite paroi de transfert est constituée d'un disque de $Mo_6X_8$, ou $M_xMo_6x_8$, pulvérulent compacté par pressage à chaud réactif (Hot Pressing).

Selon une disposition particulière, la paroi de transfert est du $Mo_6S_8$, obtenu par synthèse d'un ternaire $M_xMo_6S_8$ puis par la désintercalation du cation M, par exemple du cuivre, par voie électrochimique.

Selon une disposition alternative, la paroi de transfert est formée de $Mo_6Se_8$ ou de $Mo_6Te_8$, obtenus directement par pressage à chaud réactif.

Selon une autre disposition particulière, le disque aura une épaisseur de l'ordre de 0,1 mm ou même moins, jusqu'à plusieurs millimètres, par exemple comprise entre 3 et 5 mm, une épaisseur faible pouvant être favorable pour obtenir de meilleures vitesses de transfert.

**EP 2 167 708 B1**

Selon encore une autre disposition particulière, le dispositif comporte des moyens de génération de courant continu ajustable raccordés entre une anode placée dans un premier des compartiments, et une cathode placée dans le deuxième compartiment.

La paroi de transfert peut aussi être raccordée électriquement à un dispositif de mesure de potentiel, raccordé à des électrodes de référence disposées respectivement dans chaque compartiment, et la source de courant peut être asservie en fonction des potentiels mesurés.

Selon des dispositions complémentaires et/ou alternatives :

La cloison de séparation des compartiments comporte une pluralité de parois de transfert.

La cuve est séparée en plusieurs compartiments adjacents successifs séparés par des parois de transfert identiques ou différentes.

Le premier compartiment comporte une anode et le générateur de courant est raccordé entre cette anode et la paroi de transfert.

D'autres caractéristiques et avantages de l'invention apparaîtront dans la description qui va être faite d'un dispositif conforme à l'invention et de ses variantes, et de plusieurs exemples de mise en oeuvre.

On se reportera aux dessins annexés dans lesquels :

- la figure 1 est un schéma de principe du dispositif,
- la figure 2 est un schéma du branchement électrique,
- la figure 3 est une vue schématique du montage d'une pastille constituant la paroi de transfert,
- la figure 4 est un schéma d'une variante de réalisation, avec contrôle du potentiel de la paroi de transfert,
- la figure 5 illustre un mode de réalisation avec plusieurs pastilles répartie dans la paroi de séparation des compartiments de la cuve,
- la figure 6 illustre une disposition utilisant plusieurs compartiments et parois de transfert en série.

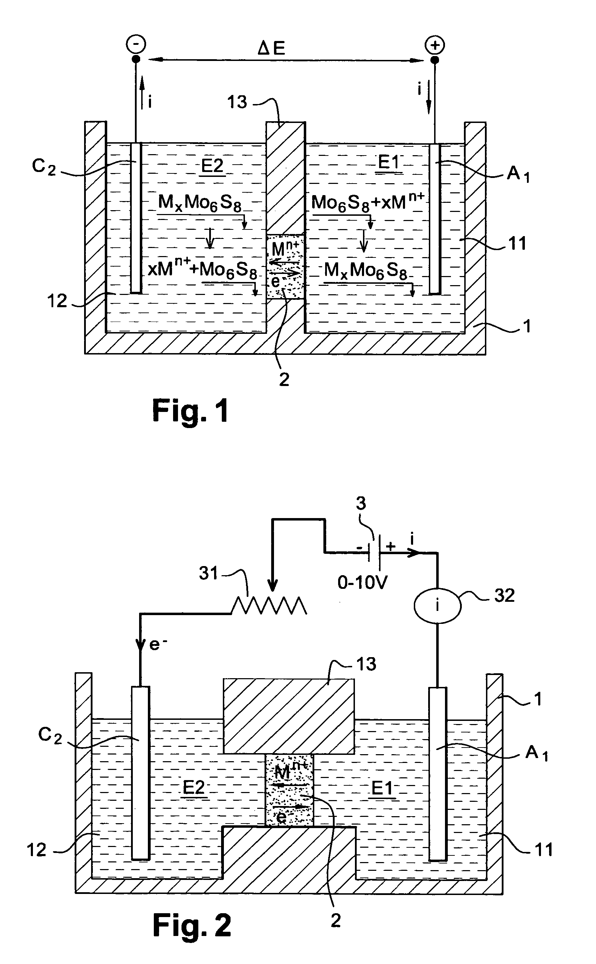

Le schéma de la figure 1 montre une cuve 1 comportant deux compartiments 11 et 12, adaptés pour recevoir un électrolyte et séparés par une cloison de séparation 13 dans laquelle est placée une paroi de transfert constituée d'une pastille 2 en forme de disque, montée dans la cloison de manière étanche.

Le dispositif comporte aussi une anode Al placée dans le premier compartiment 11 et une cathode C2 placée dans le deuxième compartiment 12. Une différence de potentiel $\Delta E$ peut être appliquée entre l'anode Al et la cathode C2, par exemple selon le schéma de branchement électrique de la figure 2, qui montre une source de courant continu 3, alimentant les deux électrodes Al et C2 via un potentiomètre 31 et un ampèremètre de contrôle 32.

La pastille 2 est formée d'un chalcogénure de molybdène, par exemple $Mo_6S_8$, $Mo_6Se_8$ ou $Mo_6Te_8$.

La fabrication de pastilles étanches est effectuée sur le principe d'une synthèse par pressage à chaud réactif, à partir de mélange de poudres de composition adaptée pour la stoechiométrie du matériau désiré.

Pendant un chauffage à une température de 900 à 1200°C, les poudres sont compactées en imposant une pression de 20 à 40 MPa entre deux pistons en graphite, par exemple de diamètre de l'ordre de 25 mm, guidés dans une matrice en graphite également. Le pressage à chaud réactif doit conduire à une compacité de la pastille formant la paroi de transfert qui est généralement supérieure à 70%, et au moins adaptée à permettre une mobilité des cations par diffusion tout en assurant une étanchéité totale aux solutions électrolytiques.

Le procédé de fabrication est différent selon qu'il s'agit de $Mo_6S_8$, $Mo_6Se_8$ ou $Mo_6Te_8$ :

a) Dans le cas de $Mo_6S_8$, et parce que ce composé n'est pas stable aux températures requises pour le pressage à chaud réactif, la synthèse de ce matériau binaire ne peut être effectuée directement à partir des éléments Mo et S, et passe par la synthèse d'un ternaire $MxMo_6S_8$, lequel est stable aux températures requises pour le pressage, avec M étant par exemple du cuivre, puis par la désintercalation ultérieure du cation $Cu^{2+}$ par voie électrochimique ou chimique.

Le mélange des constituants pulvérulents est homogénéisé puis placé dans la matrice de graphite. Le chauffage est effectué sous atmosphère d'argon jusqu'à une température de 1000° C, maintenue pendant 3 h, puis retour à la température ambiante. Une pression de 30 MPa est appliquée en permanence pendant le chauffage et le maintien en température.

Dans ce cas, la réaction de synthèse lors du pressage à chaud réactif s'effectue selon :

$$3\ Cu^0 + 4\ MoS_2 + 2\ Mo^0 \rightarrow Cu_3Mo_6S_8$$

On obtient donc une pastille de ce matériau ternaire ayant typiquement les caractéristiques suivantes :

| Diamètre : 24,3 mm | Epaisseur : 4,4 mm |
|---|---|
| Densité théorique : 5,92 g/cm$^3$ | Densité expérimentale : 5,83 g/cm$^3$ |

Cette pastille peut alors être placée dans le dispositif. La désintercalation du cation $Cu^{2+}$ pour obtenir $Mo_6S_8$ est alors effectuée par voie électrochimique, par une mise en oeuvre préalable du dispositif, avant l'utilisation effective du dispositif pour la mise en oeuvre du procédé.

b) Dans le cas de $Mo_6Se_8$, ce composé binaire étant stable en température, la synthèse est pratiquée directement sur le composé binaire à partir des éléments $MoSe_2$ et $Mo^0$

La réaction de synthèse lors du pressage à chaud réactif s'effectue alors selon :

$$4\ MoSe_2 + 2\ Mo^0 \rightarrow Mo_6Se_8$$

Le chauffage est effectué sous atmosphère d'argon jusqu'à une température de 1200° C, maintenue pendant 3 h, puis retour à la température ambiante. Une pression de 30 MPa est appliquée en permanence pendant le chauffage et le maintien en température.
On obtient une pastille ayant typiquement les caractéristiques suivantes :

| Diamètre : 24,3 mm | Epaisseur : 4,4 mm |
|---|---|
| Densité théorique : 6,69 g/cm$^3$ | Densité expérimentale : 6,67 g/cm$^3$ |

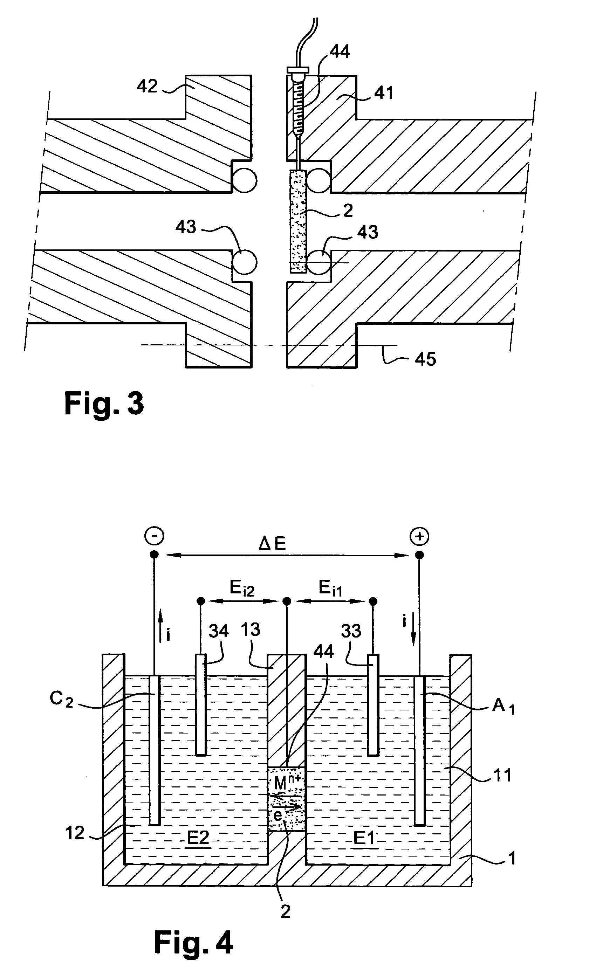

Dans un mode de réalisation particulier, la pastille de $Mo_6S_8$ ou $Mo_6Se_8$ est montée dans le dispositif comme représenté figure 3, entre deux brides 41, 42 liées respectivement aux compartiments 11 et 12 et serrées l'une contre l'autre par des vis 45, l'étanchéité étant assurée par des joints toriques 43. Un système de contact mobile à ressort 44 assure une connexion électrique avec la pastille 2, et permet de relier celle-ci à un appareil de contrôle, adapté notamment pour mesurer le potentiel d'interface Ei1, Ei2 de la pastille par rapport à des électrodes de référence 33, 34 disposées respectivement dans chaque compartiment de la cuve, comme illustré figure 4.
La mise en oeuvre du dispositif s'effectue typiquement de la manière suivante :
On remplit les compartiments 11 et 12 avec l'électrolyte souhaité, par exemple, et de manière nullement limitative, 100 ml $Na_2SO_4$ de concentrations comprises entre 0,5 et 1 M + $M_{(i)}SO_4$ en concentrations comprises entre 0,1 et 1M + optionnellement $H_2SO_4$ en concentration comprises entre 0 et 1M comme premier électrolyte E1 dans le premier compartiment 11, et 100 ml $Na_2SO_4$ de concentrations comprises entre 0,5 et 1 M + optionnellement $H_2SO_4$ en concentration comprises entre 0 et 1M comme deuxième électrolyte E2 dans le deuxième compartiment 12, avec $M_{(i)}$ étant un ou plusieurs cations métalliques que l'on souhaite séparer. On place l'anode Al dans le premier compartiment 11 et la cathode C2 dans le deuxième compartiment 12, et on relie le contact 44 de la pastille avec des moyens de contrôle potentiométrique, raccordés aux électrodes de référence 33, 34 plongées dans les électrolytes E1 et E2. On peut ainsi contrôler les potentiels d'interface et ajuster en conséquence le potentiel global $\Delta E$ appliqué entre l'anode Al et la cathode C2, en pilotant le réglage du potentiomètre 31, de manière à obtenir une densité de courant rapportée à la surface opérationnelle de la paroi de transfert, ou de l'ensemble des parois de transfert disposées en parallèle, comprise par exemple entre 0,2 et 20 mA/cm$^2$.
Un régime intensiostatique global est établi entre l'anode Al et la cathode C2. Dans le fonctionnement électrochimique global de l'ensemble des deux compartiments, l'électrolyte E1 étant une solution d'origine à traiter comportant un mélange des cations de différents métaux et de charges identiques ou différentes, $M^{n+}$, $M'^{n+}$, $M''^{n'+}$ par exemple, et l'électrolyte E2 étant une solution de valorisation du métal M, il se produit, comme illustré, figure 1 :

- l'intercalation du cation $M^{n+}$ à l'interface $M_xMo_6S_8$ / électrolyte E1, selon :

$$Mo_6S_8 + x\ M^{n+} + xn\ e^- \Rightarrow M_xMo_6S_8$$

- la désintercalation de ce même cation à l'interface $M_xMo_6S_8$ /électrolyte E2 (solution de valorisation de $M^{n+}$ par exemple) s'effectue réciproquement selon

$$M_x Mo_6 S_8 \Rightarrow Mo_6 S_8 + xn\ e^- + x\ M^{n+}$$

La mobilité du cation métallique dans la phase de Chevrel permet ainsi le transfert du cation $M^{n+}$ désolvaté d'un milieu à l'autre sans transfert d'aucune autre espèce chimique de l'un ou de l'autre des compartiments.

Comme la réaction est susceptible de générer des ions hydroxydes $OH^-$, les cations risquent de précipiter. Afin de pallier cet inconvénient, on peut prévoir de l'acide sulfurique dans les électrolytes E1 et E2 afin de maintenir les cations dissous. La durée de vie des électrolytes s'en trouve augmentée.

Les cations susceptibles d'être traités selon l'invention, c'est à dire capables d'être engagés dans les réactions d'intercalation-désintercalation, sont pour les phases sulfurées, séléniées et tellurées ($Mo_6 S_8$, $Mo_6 Se_8$ et $Mo_6 Te_8$) la plupart des métaux: Fe, Mn, Co, Ni, Cr, Cu, Zn, Cd, pouvant figurer dans de nombreux problèmes de gestion d'effluents et de rejets solides, en particulier dans l'industrie des piles et accumulateurs, ainsi que les métaux alcalins et alcalino-terreux Li, Na, Mg.

Les inventeurs ont pu constater que, avantageusement, et malgré le caractère polycristallin des parois de transfert, des rendements faradiques de transfert rapporté au fonctionnement du couple redox d'intercalation-désintercalation (2 électrons pour le transfert d'un cation $M^{2+}$) et pour des densités de courant dans la gamme de 1 à 10 mA/cm$^2$, sont proches de 100 %.

Dans les exemples suivants, réalisés à partir de mélanges de deux cations équimolaires (0,1 M), la sélectivité du transfert est exprimée par un taux de sélectivité de transfert du cation $M^{n+}$ représenté par le rapport $M_t^{n+} / \Sigma M_i^{n+}$ de la quantité de cations transférés $M_t^{n+}$ à la somme des cations transférés dans le compartiment 12, par exemple $Co_t/(Co_t + Ni_t)$ pour le mélange $Co^{2+} + Ni^{2+}$.

Ce rapport est donc d'autant plus proche de 1 que la sélectivité est grande.

Exemple 1:

**Mélange Co/Ni** = 1 avec $[Co^{2+}] = [Ni^{2+}] = 0,1$ M

a) en milieu $H_2O$, électrolyte $Na_2SO_4$

On impose une intensité de 2,5 mA soit une densité de courant de 0,72 mA/cm$^2$ durant 6 heures.

Compartiment 11 : Co/Ni 0,1 M
Compartiment 12 : $Na_2SO_4$ 0,1 M
Anode A1 : Titane platiné
Cathode C2 : Inox

Paroi de transfert : pastille de $Mo_6 S_8$, épaisseur de 4,4 mm, diamètre 24,3 mm, soit une surface de 4,63 cm$^2$ pour la pastille et une surface « active » en contact avec les électrolytes de 3,46 cm$^2$

Compacité : 98,5%.

A température ambiante et avec agitation pour la solution du compartiment 12.

Au cours de l'opération, on relève les trois potentiels entre, respectivement, le compartiment 11 et la pastille, le compartiment 12 et la pastille, et entre les compartiments 11 et 12, ceci afin de pouvoir contrôler les paramètres électriques du transfert.

Pour ce mélange, on a obtenu un taux de sélectivité de transfert du Cobalt de 99%, et un rendement faradique sur la somme des deux cations de 97%.

b) la même expérience que précédemment est conduite en milieu $H_2O$ en remplaçant dans l'électrolyte $Na_2SO_4$ par $H_2SO_4$, à 0,1M.

Pour ce mélange en milieu acide en imposant une densité de courant de 0,72 mA/cm$^2$, le taux de sélectivité est de 99,1% et le rendement faradique de 98,2%.

En imposant une densité de courant de 2,16 mA/cm2 le taux de sélectivité est de 98,7 % et le rendement faradique de 97,4 %

Exemple 2:

**Mélange Cd/Zn =** 1 et $[Cd^{2+}] = [Zn^{2+}] = 0,1$ M : en

a) milieu H$_2$O, électrolyte Na$_2$SO$_4$ On impose une intensité de 2,5 mA soit une densité de courant de 0,72 mA/cm$^2$ durant 6 heures.

Compartiment 11 : Cd/Zn 0,1 M
Compartiment 12 : Na$_2$SO$_4$ 0,1 M
Anode : Titane platiné
Cathode : Inox
Paroi de transfert : pastille en Mo$_6$S$_8$, épaisseur 4,4 mm, diamètre = 24,3 mm, Compacité : 98,5%.

A température ambiante et avec agitation pour la solution du compartiment 12.
Pour ce mélange, on a obtenu un taux de sélectivité de transfert du Cadmium de 97,6% et un rendement faradique de 99%.

b) la même expérience que précédemment est conduite en milieu H$_2$O en remplaçant dans l'électrolyte Na$_2$SO$_4$ par H$_2$SO$_4$ 0,1 M. On a obtenu pour ce mélange

pour une densité de courant de 0,72 mA/cm2 on obtient un taux de sélectivité de 97,8 % et un rendement faradique de 98,1%
pour une densité de courant de 2,16 mA/cm2 on obtient un taux de sélectivité de 98,2% et un rendement faradique de 98,9 %

Exemple 3:

**Mélange Cd/Ni** 0,1 M en milieu aqueux
On impose une intensité de 2,5 mA soit une densité de courant de 0,72 mA/cm$^2$ durant 6 heures.

Compartiment 11 : Cd/Ni = 1 et [Cd$^{2+}$]=[Ni$^{2+}$] = 0,1 M
Compartiment 12 : Na$_2$SO$_4$ 0,1 M
Anode : Titane platiné
Cathode : Inox

a) Paroi de transfert : pastille Mo$_6$S$_8$, e = 4,4 mm, diamètre = 24,3 mm, Compacité : 98,5%.

A température ambiante et avec agitation pour la solution du compartiment 12.
Pour ce mélange et la pastille en Mo$_6$S$_8$, on a obtenu un taux de sélectivité de transfert du cadmium de 70% et un rendement faradique de 98%.

b) Paroi de transfert : pastille Mo$_6$Se$_8$, e = 3,4 mm, diamètre = 24,3 mm, Compacité : 99%.

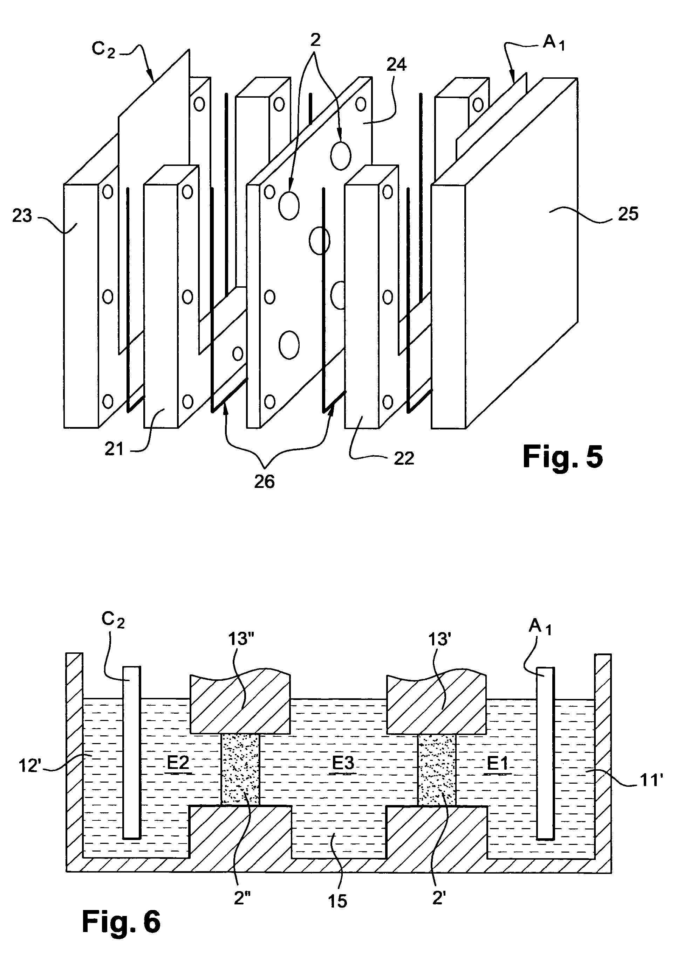

A température ambiante et avec agitation pour la solution du compartiment 12.
Pour ce mélange et la pastille en Mo$_6$Se$_8$, on a obtenu un taux de sélectivité de transfert du cadmium de 90% et un rendement faradique de 97%
On constate ainsi que le procédé selon l'invention permet d'obtenir une très bonne sélectivité du transfert des cations, et cela avec un rendement faradique également très élevé.
La mise en oeuvre du procédé peut aussi être effectuée selon diverses variantes, dont celles représentées aux figures 5 et 6.
Dans la variante de la figure 5, la cuve est constituée par un assemblage de parois latérales 21, 22 en forme de U et de parois transversales 23, 24, 25 maintenues assemblées, juxtaposées et avec interposition de joints d'étanchéité 26. Les parois transversales 23 et 25 constituent les parois d'extrémités de la cuve. La paroi intermédiaire 24 constitue la cloison de séparation des deux compartiments de la cuve et porte une pluralité de pastilles 2 formant les parois de transfert selon l'invention. Une telle disposition permet d'accroître la surface utile de transfert, et donc la vitesse globale du transfert.
Dans la variante de la figure 6, la cuve comporte trois compartiments. Les deux compartiments extrêmes 11', 12' sont équivalents aux compartiments 11 et 12 de l'exemple représenté figure 1. Un compartiment supplémentaire 15, contenant un électrolyte E3 est situé entre les deux compartiments 11' et 12' et séparé de ceux-ci par des parois de séparation 13', 13" comportant chacune une ou des pastilles 2', 2" formant des parois de transfert selon l'invention. Ces pastilles peuvent être de même nature, pour simplement accroître la sélectivité du transfert du compartiment 11' au compartiment 12'. Elles peuvent aussi être de nature différente, et être gérées de manière différente par une mesure spécifique des potentiels entre les divers compartiments par exemple, pour effectuer une séparation de différents cations. Par exemple, on peut transférer deux types de cations du compartiment 11' au compartiment 15, et un seul du compartiment 15 au compartiment 12'. Diverses combinaisons de pastilles et de paramètres de transferts peuvent ainsi être utilisées pour effectuer des séparations et traitements divers souhaités. Les transferts peuvent être en simultané sur les trois compartiments avec un même courant traversant les deux pastilles 2', 2". D'une autre manière, les transferts peuvent se faire par étapes en fonctionnant successivement sur deux compartiments, par exemple 15 et 12' d'abord, puis 11' et 15, en adaptant la localisation des électrodes A1 et C2.

On notera encore de manière générale que les électrolytes placés dans les deux compartiments 11, 12 comportant l'anode AI et la cathode C2 peuvent être différents, notamment par la nature des sels de fond, par le niveau d'acidité, par la présence de complexants, par la nature des solvants, notamment solvants non aqueux organiques ou minéraux (DMSO, DMF, liquides ioniques, électrolytes solides, etc.). On peut ainsi par exemple effectuer un transfert ionique d'un milieu sulfate à un milieu chlorure sans diffusion du dit milieu.

Dans le cas de la variante de la figure 6, le ou les électrolytes intermédiaires E3 peuvent aussi être identiques ou différents de l'un ou des deux électrolytes E1 ou E2.

## Revendications

1. Procédé d'extraction sélective de cations ($M^{n+}$) par transfert électrochimique en solution d'un premier électrolyte (E1) à un second électrolyte (E2),
   **caractérisé en ce qu'**on utilise comme paroi de séparation des électrolytes une paroi de transfert (2) formée de chalcogénure à cluster de molybdène ($Mo_nX_{n+2}$, $Mo_nX_n$, $M_xMo_nX_{n+2}$ ou $M_xMo_nX_n$), et on assure un transfert des cations à travers la dite paroi de transfert en générant une différence de potentiel ($\Delta E$) entre d'une part le premier électrolyte (E1), et d'autre part le deuxième électrolyte (E2) ou la dite paroi de transfert (2), de manière à provoquer une intercalation des cations dans la paroi de transfert du côté du premier électrolyte, une diffusion des cations, dans celle-ci, puis leur désintercalation dans le deuxième électrolyte.

2. Procédé selon la revendication 1, **caractérisé en ce que** les chalcogénures à cluster de molybdène sont des composés binaires ($Mo_nX_{n+2}$, $Mo_nX_n$) ou ternaires ($M_xMo_nX_{n+2}$, $M_xMo_nX_n$), avec X étant choisi parmi S (Soufre), Se (Sélénium) ou Te (Tellure), et M étant un métal.

3. Procédé selon la revendication 1, **caractérisé en ce que** les électrolytes (E1, E2) sont différents.

4. Procédé selon la revendication 1, **caractérisé en ce que** au moins un des électrolytes (E1, E2) est non aqueux.

5. Procédé selon la revendication 1, **caractérisé en ce que** au moins l'un des électrolytes (E1, E2) contient de l'acide, par exemple de l'acide sulfurique.

6. Procédé selon la revendication 1, **caractérisé en ce que** la paroi de transfert (2) est raccordée électriquement à un appareil de mesure du potentiel entre la dite paroi et des électrodes de référence (33, 34) situées respectivement dans chaque électrolyte (E1, E2) et on ajuste en conséquence le potentiel appliqué entre les dits électrolytes.

7. Procédé selon la revendication 1, **caractérisé en ce que** la différence de potentiel ($\Delta E$) est générée entre le premier électrolyte (E1) et la paroi de transfert (2), et la désintercalation des cations du côté du deuxième électrolyte (E2) est une désintercalation chimique par un oxydant chimique dans le deuxième électrolyte.

8. Procédé selon la revendication 1, **caractérisé en ce que** on assure une succession de transferts de cations à travers des parois de transfert (2) disposées successivement entre des électrolytes d'extrémité (E1, E2), et avec un ou des électrolytes intermédiaires E3) entre les différentes parois de transfert.

9. Dispositif d'extraction sélective de cations par transfert électrochimique en solution, le dispositif comportant une cuve (1) avec au moins deux compartiments (11, 12) agencés pour contenir chacun un électrolyte (E1, E2) et séparés par une cloison étanche (13), **caractérisé en ce que** la dite cloison étanche est constituée au moins en partie d'au moins une paroi de transfert (2) formée de chalcogénure à cluster de molybdène.

**10.** Dispositif d'extraction selon la revendication 9, **caractérisé en ce que** la paroi de transfert (2) est formée d'un composé binaire $Mo_6X_8$ ou ternaire $M_xMo_6X_8$ avec X étant S, Se, ou Te, et M étant un métal.

**11.** Dispositif d'extraction selon la revendication 9, **caractérisé en ce qu'**il comporte des moyens de génération de courant (3) ajustables raccordés entre une anode (A1) placée dans un premier des compartiments (11), et une cathode (C2) placée dans le deuxième compartiment (12).

**12.** Dispositif d'extraction selon la revendication 9, **caractérisé en ce que** la paroi de transfert (2) est raccordée électriquement à un dispositif de mesure de potentiel, raccordé à des électrodes de références (33, 34) disposées respectivement dans chaque compartiment (11, 12).

**13.** Dispositif d'extraction selon la revendication 9, **caractérisé en ce que** la cloison (13) de séparation des compartiments comporte une pluralité de parois de transfert (2).

**14.** Dispositif d'extraction selon la revendication 9, **caractérisé en ce que** la cuve est séparée en plusieurs compartiments (11, 12, 15) adjacents successifs séparés par des parois de transfert (2', 2") identiques ou différentes.

**15.** Dispositif d'extraction selon la revendication 9, **caractérisé en ce que** le premier compartiment comporte une anode (A1) et le générateur de courant (3) est raccordé entre cette anode et la paroi de transfert (2).

**16.** Application du procédé selon l'une des revendications 1 à 8 au traitement de solutions contenant un ou plusieurs des métaux suivant : Fe, Mn, Co, Ni, Cr, Cu, Zn, Cd, Li, Na, Mg.

**17.** Application du procédé selon l'une des revendications 1 à 8 à la valorisation du ou des métaux transférés dans le deuxième électrolyte.

**18.** Application du procédé selon l'une des revendications 1 à 8 à l'épuration du premier électrolyte.

**19.** Application du procédé selon l'une des revendications 1 à 8 à la concentration d'une solution en cations, par transfert de cation d'une solution diluée constituant le premier électrolyte vers le deuxième électrolyte de volume réduit par rapport au premier électrolyte.

**20.** Application du procédé selon l'une des revendications 1 à 8 à la récupération directe à l'état métallique du cation transféré, par électrodéposition sur l'électrode(C2) disposée dans le deuxième électrolyte (E2).

**Claims**

**1.** Method for selective cation ($M^{n+}$) extraction by electrochemical transfer in solution from a first electrolyte (E1) to a second electrolyte (E2),
**characterised in that** a transfer wall (2) made of chalcogenide with molybdenum clusters ($Mo_nX_{n+2}$, $Mo_nX_n$, $M_x$-$Mo_nX_{n+2}$ or $M_xMo_nX_n$) is used as electrolyte separation wall and a transfer of the cations through the said transfer wall is ensured by generating a potential difference ($\Delta E$) between, on the one hand, the first electrolyte (E1) and, on the other hand, the second electrolyte (E2) or the said transfer wall (2) to induce an interleaving of the cations in the transfer wall on the side of the first electrolyte, a scattering of the cations therein then the de-interleaving thereof in the second electrolyte.

**2.** Method according to claim 1, **characterised in that** the chalcogenides with molybdenum clusters are binary ($Mo_nX_{n+2}$, $Mo_nX_n$) or ternary ($M_xMo_nX_{n+2}$, $M_xMo_nX_n$) compounds, X being chosen among S (Sulphur), Se (Selenium) or Te (Tellurium) and M being a metal.

**3.** Method according to claim 1, **characterised in that** the electrolytes (E1, E2) are different.

**4.** Method according to claim 1, **characterised in that** at least one of the electrolytes (E1, E2) is non-aqueous.

**5.** Method according to claim 1, **characterised in that** at least one of the electrolytes (E1, E2) contains acid, for example sulphuric acid.

6. Method according to claim 1, **characterised in that** the transfer wall (2) is electrically connected to a potential measuring instrument between the said wall and reference electrodes (33, 34) located respectively in each electrolyte (E1, E2) and the potential applied between the said electrolytes is adjusted to suit.

7. Method according to claim 1, **characterised in that** the potential difference ($\Delta E$) is generated between the first electrolyte (E1) of the transfer wall (2) and the de-interleaving of the cations on the side of the second electrolyte (E2) is a chemical de-interleaving by a chemical oxidising agent in the second electrolyte.

8. Method according to claim 1, **characterised in that** a succession of cation transfers is ensured through the transfer walls (2) arranged successively between the end electrolytes (E1, E2) and with one or more intermediary electrolytes (E3) between the various transfer walls.

9. Device for selective cation extraction by electrochemical transfer in solution, the device including a tank (1) with at least two compartments (11, 12) arranged to each contain an electrolyte (E1, E2) and separated by a sealed wall (13), **characterised in that** the said sealed wall consists at least in part of at least one transfer wall (2) made of chalcogenide with molybdenum clusters.

10. Extraction device according to claim 9, **characterised in that** the transfer wall (2) is made of a binary $Mo_6X_8$ or ternary $M_xMo_6X_8$ compound with X being S, Se or Te and M being a metal.

11. Extraction device according to claim 9, **characterised in that** it includes adjustable current generation means (3) connected between an anode (A1) placed in a first compartment (11) and a cathode (C2) placed in the second compartment (12).

12. Extraction device according to claim 9, **characterised in that** the transfer wall (2) is electrically connected to a potential measuring device connected to the reference electrodes (33, 34) placed respectively in each compartment (11, 12).

13. Extraction device according to claim 9, **characterised in that** the compartment separation partition (13) includes a plurality of transfer walls (2).

14. Extraction device according to claim 9, **characterised in that** the tank is separated into several successive adjacent compartments (11, 12, 15) separated by identical or different transfer walls (2', 2").

15. Extraction device according to claim 9, **characterised in that** the first compartment includes an anode (A1) and the current generator (3) is connected between this anode and the transfer wall (2).

16. Application of the method according to one of the claims 1 to 8 to the treatment of solutions containing one or more of the following metals: Fe, Mn, Co, Ni, Cr, Cu, Zn, Cd, Li, Na, Mg.

17. Application of the method according to one of the claims 1 to 8 to the valorisation of the metal or metals transferred in the second electrolyte.

18. Application of the method according to one of the claims 1 to 8 to the purification of the first electrolyte.

19. Application of the method according to one of the claims 1 to 8 to the concentration of a cation solution by transfer of cations from a diluted solution comprising the first electrolyte to the second electrolyte with a reduced volume in relation to the first electrolyte.

20. Application of the method according to one of the claims 1 to 8 to the direct recovery in metallic state of the transferred cation by electrodeposition on the electrode (C2) placed in the second electrolyte (E2).


**Patentansprüche**

1. Verfahren zur selektiven Extraktion von Kationen ($M^{n+}$) durch elektrochemischen Transfer in Lösung von einem ersten Elektrolyten (E1) in einen zweiten Elektrolyten (E2),
**dadurch gekennzeichnet, dass** als Trennwand zur Trennung der Elektrolyten eine Transfermembran (2) verwendet wird, die aus Molybdänclusterchalkogenid ($Mo_nX_{n+2}$, $Mo_nX_n$, $M_xMo_nX_{n+2}$ oder $M_xMo_nX_n$) besteht, und ein Transfer von Kationen durch die genannte Transfermembran sichergestellt wird, indem eine Potentialdifferenz ($\Delta E$) zwischen dem ersten Elektrolyten (E1) einerseits und dem zweiten Elektrolyten (E2) oder der genannten Transfermembran (2) andererseits erzeugt wird, derart, dass auf der Seite des ersten Elektrolyten eine Einlagerung der Kationen in die Transfermembran bewirkt wird, eine Diffusion der Kationen in dieser und dann ihre Freisetzung in den zweiten Elektrolyten.

2. Verfahren nach Patentanspruch 1, **dadurch gekennzeichnet, dass** die Molybdänclusterchalkogenide binäre ($Mo_nX_{n+2}$, $Mo_nX_n$) oder ternäre ($M_xMo_nX_{n+2}$, $M_xMo_nX_n$) Verbindungen sind, wobei X unter S (Schwefel), Se (Selenium) und Te (Tellurium) ausgewählt wird und M ein Metall ist.

3. Verfahren nach Patentanspruch 1, **dadurch gekennzeichnet, dass** die Elektrolyten (E1, E2) verschieden sind.

4. Verfahren nach Patentanspruch 1, **dadurch gekennzeichnet, dass** mindestens einer der Elektrolyten nichtwässrig ist.

5. Verfahren nach Patentanspruch 1, **dadurch gekennzeichnet, dass** mindestens einer der Elektrolyten (E1, E2) Säure enthält, beispielsweise Schwefelsäure.

6. Verfahren nach Patentanspruch 1, **dadurch gekennzeichnet, dass** die Transfermembran (2) an eine Vorrichtung zur Messung des Potentials zwischen der genannten Trennwand und Bezugselektroden (33, 34), die sich jeweils in einem der Elektrolyten (E1, E2) befinden, elektrisch angeschlossen ist und das zwischen den beiden Elektrolyten angelegte Potential entsprechend geregelt wird.

7. Verfahren nach Patentanspruch 1, **dadurch gekennzeichnet, dass** die Potentialdifferenz ($\Delta E$) zwischen dem ersten Elektrolyten (E1) und der Transfermembran (2) erzeugt wird und die Freisetzung der Kationen auf der Seite des zweiten Elektrolyten (E2) eine chemische Freisetzung durch ein chemisches Oxydationsmittel im zweiten Elektrolyten ist.

8. Verfahren nach Patentanspruch 1, **dadurch gekennzeichnet, dass** eine Folge von Kationentransfers durch Transfermembranen (2) sichergestellt wird, die aufeinanderfolgend zwischen Endelektrolyten (E1, E2) angeordnet sind, mit einem oder mehreren Zwischenelektrolyten (E3) zwischen den verschiedenen Transfermembranen.

9. Vorrichtung zur selektiven Extraktion von Kationen durch elektrochemischen Transfer in Lösung, wobei die Vorrichtung ein Gefäß (1) mit mindestens zwei Kammern (11, 12) umfasst, die derart angeordnet sind, dass sie jeweils einen Elektrolyten (E1, E2) aufnehmen, und die durch eine dichte Trennwand (13) voneinander getrennt sind, **dadurch gekennzeichnet, dass** die genannte Trennwand mindestens teilweise aus mindestens einer Transfermembran (2) besteht, die aus Molybdänclusterchalkogenid besteht.

10. Extraktionsvorrichtung nach Patentanspruch 9, **dadurch gekennzeichnet, dass** die Transfermembran (2) aus einer binären $Mo_6X_8$ oder ternären Verbindung $M_xMo_6X_8$ besteht, wobei X für S, Se oder Te steht und M ein Metall ist.

11. Extraktionsvorrichtung nach Patentanspruch 9, **dadurch gekennzeichnet, dass** sie regelbare Stromerzeugungsmittel (3) umfasst, die zwischen eine Anode (A1), die in einer ersten der Kammern (11) angeordnet ist, und eine Kathode (C2), die in der zweiten Kammer (12) angeordnet ist, geschaltet ist.

12. Extraktionsvorrichtung nach Patentanspruch 9, **dadurch gekennzeichnet, dass** die Transfermembran (2) mit einer Vorrichtung zur Potentialmessung elektrisch verbunden ist, die an Bezugselektroden (33, 34) angeschlossen ist, die jeweils in einer der Kammern (11 , 12) angeordnet sind.

13. Extraktionsvorrichtung nach Patentanspruch 9, **dadurch gekennzeichnet, dass** die Trennwand (13) zur Trennung der Kammern mehrere Transfermembranen (2) umfasst.

14. Extraktionsvorrichtung nach Patentanspruch 9, **dadurch gekennzeichnet, dass** das Gefäß in mehrere aufeinander folgende, aneinander anschließende Kammern (11, 12, 15) unterteilt ist, die durch identische oder verschiedene Transfermembranen (2', 2") voneinander getrennt sind.

15. Extraktionsvorrichtung nach Patentanspruch 9, **dadurch gekennzeichnet, dass** die erste Kammer eine Anode (A1) aufweist und die Stromquelle (3) zwischen diese Anode und die Transfermembran (2) geschaltet ist.

16. Anwendung des Verfahrens nach einem der Patentansprüche 1 bis 8, zur Behandlung von Lösungen, die ein oder mehrere der folgenden Metalle enthalten: Fe, Mn, Co, Ni, Cr, Cu, Zn, Cd, Li, Na, Mg.

17. Anwendung des Verfahrens nach einem der Patentansprüche 1 bis 8 zur Verwertung des oder der in den zweiten Elektrolyten transferierten Metalle(s).

18. Anwendung des Verfahrens nach einem der Patentansprüche 1 bis 8 zur Aufbereitung des ersten Elektrolyten.

19. Anwendung des Verfahrens nach einem der Patentansprüche 1 bis 8 zur Erhöhung der Kationenkonzentration einer Lösung durch Transfer von Kationen aus einer verdünnten Lösung, die den ersten Elektrolyten darstellt, in den zweiten Elektrolyten geringeren Volumens, als dem des ersten Elektrolyten.

20. Anwendung des Verfahrens nach einem der Patentansprüche 1 bis 8 zur unmittelbaren Gewinnung des transferierten Kations in metallischer Form durch Galvanostegie auf der Elektrode (C2), die im zweiten Elektrolyten (E2) angeordnet ist.

**Fig. 1**

**Fig. 2**

**Fig. 3**

**Fig. 4**

**Fig. 5**

**Fig. 6**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 4917871 A
- US 5041347 A
- FR 2765811
- WO 0109959 A
- WO 0205366 A
- US 20050220699 A
- JP 2005317289 A

**Littérature non-brevet citée dans la description**

- **Xu, T.** Ion exchange membranes : state of their development and perspective. *Journal of Membrane Science,* 2005, vol. 263, 1-29